# EUROPÄISCHE PATENTSCHRIFT

(11) **EP 2 475 864 B1**
(45) Veröffentlichungstag und Bekanntmachung des Hinweises auf die Patenterteilung: **21.10.2015**
(21) Anmeldenummer: 10766224.9
(22) Anmeldetag: 27.08.2010
(51) Int. Cl.: F02D 41/00, F02D 19/08, F02D 19/06

(54) **VERFAHREN ZUM BETREIBEN EINES SCHIFFSDIESELMOTORS**
METHOD FOR OPERATING A MARINE DIESEL ENGINE
PROCÉDÉ PERMETTANT DE FAIRE FONCTIONNER UN MOTEUR DIESEL DE NAVIRE

(30) Priorität: 11.09.2009 DE 102009040917
(43) Veröffentlichungstag der Anmeldung: 18.07.2012
(73) Patentinhaber: Porep GmbH, 23775 Großenbrode (DE)
(72) Erfinder: POREP, Thomas, 23775 Großenbrode (DE)
(74) Vertreter: Lobemeier, Martin Landolf
(86) Internationale Anmeldenummer: PCT/DE2010/000993
(87) Internationale Veröffentlichungsnummer: WO 2011/029418

(56) Entgegenhaltungen:
- WO-A1-81/01803
- DE-A1- 19 828 772
- DE-A1-102007 056 819
- JP-A- 59 037 239

## Beschreibung

Die Erfindung betrifft ein Verfahren zum Umschalten einer Verbrennungskraftmaschine vom Betrieb mit einem ersten Kraftstoff auf den Betrieb mit einem zweiten Kraftstoff, wobei der erste Kraftstoff bei einer vorbestimmten Temperatur eine erste Viskosität und der zweite Kraftstoff bei derselben Temperatur eine von der ersten Viskosität abweichende zweite Viskosität aufweist, mit den Schritten Betreiben der Verbrennungskraftmaschine mit einem Kraftstoffgemisch mit einem vorbestimmten ersten Verhältnis von erstem Kraftstoff zu zweitem Kraftstoff, und Ändern des Anteils von erstem Kraftstoff zu zweitem Kraftstoff mit einer vorbestimmten Änderungsrate bis ein vorbestimmtes zweites Verhältnis von erstem Kraftstoff zu zweitem Kraftstoff erreicht ist, wobei wenigstens ein Kraftstoff oder das Kraftstoffgemisch zum Erreichen einer vorbestimmten Viskosität temperiert werden.

Ein derartiges Verfahren ist aus der DE 10 2007 056 819 A1 bekannt.

In der Seeschifffahrt gelten Sondervorschriften, nach denen Seeschiffe, die Sondergebiete wie z.B. europäische Länder oder die USA anlaufen, Kraftstoffe mit reduziertem Schwefelgehalt, nachstehend LSF (**L**ow **S**ulphur **F**uel, z.B. Marinedieselöl (MDO) oder Marine Gas Öl (MGO)) genannt, benutzen müssen, auf offener See jedoch mit stark schwefelhaltigem Schweröl, nachstehend HFO (**H**eavy **F**uel **O**il) genannt, betrieben werden.

Wie bei Kraftfahrzeugen auch erfolgt die Einstellung der Viskosität der für Schiffsdieselmotoren geeigneten Kraftstoffe durch Temperaturanpassung, wobei der Kraftstoff HFOauf bis zu 150 °C erwärmt und der bei Befahren der Sondergebiete verwendete Kraftstoff LSF im Extremfall auf 20 °C gekühlt werden muss.

Allerdings tritt beim Umstellen von einem Kraftstoff oder Kraftstoffgemisch auf einen anderen Kraftstoff bzw. ein anderes Kraftstoffgemisch mit unterschiedlicher Viskosität häufig das Problem auf, dass der Umschaltvorgang ohne Auftreten technischer Probleme sehr lange dauert oder aufgrund eines zu schnellen Umschaltens Schädigungen an der Verbrennungskraftmaschine hervorruft.

Aus der 198 28 772 A1 ist es bekannt, die Temperatur des bisherigen Brennstoffs vor dem Umschalten auf den neuen Brennstoff an dessen Temperatur heranzuführen. Dieses Vorgehen setzt aber das Vorhandensein eines Heizgerätes voraus, weiter erlaubt das Verfahren kein schnelles Umschalten.

Aufgabe der Erfindung ist es daher, ein Verfahren zum Umstellen von einem ersten Kraftstoff auf einen zweiten Kraftstoff zu schaffen, das bei Verzicht auf ein Heizgerät ein schnelles Umschalten zwischen Kraftstoffen unterschiedlicher Viskosität ermöglicht und dabei eine Beschädigung der Verbrennungskraftmaschine aufgrund eines zu schnellen Umschaltens zwischen den Kraftstoffen vermeidet.

Die Aufgabe wird erfindungsgemäß durch das Verfahren mit den Merkmalen von Anspruch 1 gelöst. Die Unteransprüche geben vorteilhafte Ausgestaltungen der Erfindung wieder.

Der Erfindung liegt die Erkenntnis zugrunde, dass aufgrund der mit sehr engen, regelmäßig nur 1 µm betragenden Toleranzen gefertigten Einspritzdüsen und Einspritzpumpen bei der Umstellung von einem ersten Kraftstoff oder Kraftstoffgemisch auf einen zweiten Kraftstoff oder ein zweites Kraftstoffgemisch auch die Wärmeausdehnung der Materialien der Einspritzdüsen bzw. der Einspritzpumpe mit berücksichtigt werden muss, um Schäden an der Maschine vorzubeugen. Hierfür ist ein technisch bedingter, anlagenspezifisch möglichst behutsamer Übergang zwischen den Kraftstoffen bzw. Kraftstoffgemischen erforderlich, wobei der Umstellvorgang vom ersten Kraftstoff/Kraftstoffgemisch zum zweiten Kraftstoff/Kraftstoffgemisch gleichzeitig möglichst schnell durchgeführt werden soll.

Grundgedanke der Erfindung ist es daher die während des Umschaltvorgangs von einem ersten Kraftstoff bzw. einem ersten Kraftstoffgemisch auf einen zweiten Kraftstoff bzw. ein zweites Kraftstoffgemisch auftretende Rate der Temperaturänderung bevorzugt vor/in der Einspritzpumpe der Verbrennungskraftmaschine zu erfassen und derart auf die Änderungsrate, d.h. das Ändern der Anteile der Kraftstoffe am Kraftstoffgemisch pro Zeiteinheit, einzuwirken, dass eine vorbestimmte Rate der Temperaturänderung, z.B. 2 °C / min, nicht überschritten wird.

Insbesondere ist es wichtig, die Rate der Temperaturänderung im Bereich der Einspritzpumpen, z.B. unmittelbar vor den Pumpen, oder sogar in den Einspritzpumpen zu erfassen, da zwischen der die Kraftstoffe zusammenführenden Mischeinrichtung, z.B. einem Mischventil, und den Einspritzpumpen verschiedene die Temperatur des Kraftstoffgemischs beeinflussende Bauteile, z.B. Filter, Pumpen, Mischer, Zwischentanks, Viskositätsmesser und -regler, Endvorwärmer und/oder Kraftstoffkühler, angeordnet sein können. Diese Bauteile haben Einfluss darauf, wie schnell sich die Kraftstofftemperatur auf dem Weg in den Verbrennungsraum ändert.

Ausgehend von einem ersten Kraftstoffgemisch mit einem vorbestimmten ersten Verhältnis von einem erstem Kraftstoff zu einem zweitem Kraftstoff, bei dem bevorzugt 100 % des ersten Kraftstoffs vorliegt, das Kraftstoffgemisch also allein aus dem ersten Kraftstoff besteht, wird eine Verbrennungskraftmaschine mit diesem ersten Kraftstoff bzw. Kraftstoffgemisch betrieben. Der erste Kraftstoff ist, sofern es sich bei der Verbrennungskraftmaschine um einen Schiffsdieselmotor handelt, bevorzugt ein Kraftstoff mit hohem Schwefelgehalt, z.B. Schweröl (HFO).

Fährt beispielsweise ein Schiff in ein Sondergebiet ein, ist es notwendig von Schweröl (HFO) auf einen Kraftstoff mit bevorzugt niedrigem Schwefelgehalt (LSH, z.B. Marinegasöl (MGO)) umzuschalten. Hierzu wird dem ersten Kraftstoff der zweite Kraftstoff hinzugegeben bzw. das Verhältnis von erstem zu zweitem Kraftstoff im Kraftstoffgemisch bevorzugt mittels eines Mischventils verändert bis ein vorbestimmtes zweites Verhältnis von erstem Kraftstoff zu zweitem Kraftstoff, bevorzugt 100 % zweiter Kraftstoff, erreicht ist.

Diese als Umschaltvorgang bezeichnete Änderung des Verhältnisses von erstem zu zweiten Kraftstoff erfolgt über einen vorbestimmten Zeitraum kontinuierlich oder in zeitlichen Abschnitten nach Art einer Rampenfunktion oder einer Sprungfunktion. So kann beispielsweise in einem ersten Schritt von einem Kraftstoffgemisch mit 100 % erstem Kraftstoff auf ein Kraftstoffgemisch mit 90 % erstem Kraftstoff und 10 % zweitem Kraftstoff umgeschaltet werden und jede weitere Änderung nach Ablauf einer bestimmten Zeiteinheit kontinuierlich erfolgen, sofern eine vorbestimmte maximale Rate der Temperaturänderung, für die die Verbrennungskraftmaschine ausgelegt ist, nicht überschritten wird.

Wie im Stand der Technik auch versteht es sich, dass wenigstens einer der Kraftstoffe oder das Kraftstoffgemisch zur Einstellung einer vorbestimmten Viskosität temperiert werden.

Erfindungsgemäß wird während des Umschaltvorgangs die beim Ändern der Kraftstoffverhältnisse pro vorbestimmter Zeiteinheit auftretende Änderung der Temperatur des Kraftstoffgemischs erfasst, wobei mittels einer Steuerung, z.B. über das bevorzugt vorgesehen Mischventil, auf die Änderungsrate der Zusammensetzung des Kraftstoffgemischs derart Einfluss genommen werden kann, dass eine vorbestimmte bevorzugt im Bereich der oder sogar in der Einspritzpumpe erfasste Rate der Temperaturänderung nicht überschritten wird. Insbesondere kann vorgesehen sein, dass die Steuerung eine Änderungsrate einstellt, bei der die maximal zulässige Rate der Temperaturänderung erreicht wird. Derart kann ein materialschonender aber zugleich schneller Umschaltvorgang erreicht werden.

Aufgrund der unterschiedlichen Qualitäten von Schweröl muss die Rate der Temperaturänderung ständig, möglichst kontinuierlich überwacht und die Änderungsrate möglichst kontinuierlich an die aktuellen Werte der Temperaturänderung angepasst werden, wobei bei Überschreiten der zulässigen Werte ein Alarm ausgegeben werden sollte.

Zunächst wird also beispielsweise von einem Kraftstoffgemisch mit 100 % HFO auf ein Kraftstoffgemisch mit 90 % HFO und 10 % LSF umgestellt und der Zeitraum betrachtet, in dem eine vorbestimmte Temperaturänderung, z.B. von 0,5 °C / min, erfolgt und die entsprechende Temperaturänderungsgeschwindigkeit, d.h. die Rate der Temperaturänderung, berechnet. Daraufhin wird eine Änderungsrate gewählt, die voraussichtlich eine nahe der maximal zulässigen Rate der Temperaturänderung von beispielsweise 2 °C liegende Rate der Temperaturänderung von beispielsweise 1,8 °C bewirken wird. Daraufhin kann eine fein abgestimmte Rückkopplung zwischen der Rate der Temperaturänderung und der Änderungsrate erfolgen.

Es versteht sich, dass der hier dargestellte Vorgang des Umschaltens von HFO auf LSF ebenso umgekehrt mit dem erfindungsgemäßen Verfahren durchgeführt werden kann, wobei auch im umgekehrten Fall ein schnelles Umstellen von einem ersten Kraftstoff bzw. Kraftstoffgemisch auf einen zweiten Kraftstoff bzw. ein zweites Kraftstoffgemisch, ohne Schäden an der Verbrennungskraftmaschine zu verursachen, ermöglicht ist. Selbstverständlich kann das Verfahren auch bei anderen Verbrennungskraftmaschinen, z.B. Motoren von Kraftfahrzeugen, angewendet werden.

## Patentansprüche

1. Verfahren zum Umschalten einer Verbrennungskraftmaschine vom Betrieb mit einem ersten Kraftstoff auf den Betrieb mit einem zweiten Kraftstoff, wobei der erste Kraftstoff bei einer vorbestimmten Temperatur eine erste Viskosität und der zweite Kraftstoff bei derselben Temperatur eine von der ersten Viskosität abweichende zweite Viskosität aufweist,
mit den Schritten
- Betreiben der Verbrennungskraftmaschine mit einem Kraftstoffgemisch mit einem vorbestimmten ersten Verhältnis von erstem Kraftstoff zu zweitem Kraftstoff, und
- Ändern des Anteils von erstem Kraftstoff zu zweitem Kraftstoff mit einer vorbestimmten Änderungsrate bis ein vorbestimmtes zweites Verhältnis von erstem Kraftstoff zu zweitem Kraftstoff erreicht ist,
wobei wenigstens ein Kraftstoff oder das Kraftstoffgemisch zum Erreichen einer vorbestimmten Viskosität temperiert wird,
**gekennzeichnet durch**
Erfassen der beim Ändern des Anteils von erstem Kraftstoff zu zweitem Kraftstoff pro vorbestimmter Zeiteinheit auftretenden Änderung der Temperatur des Kraftstoffgemischs und
Einstellen der Rate der Änderung des Anteils, bei der eine vorbestimmte maximal zulässige Rate der Änderung der Temperatur nicht überschritten wird.

2. Verfahren nach Anspruch 1, **dadurch gekennzeichnet, dass** das erste Verhältnis von erstem Kraftstoff zu zweitem Kraftstoff einen Anteil an erstem Kraftstoff von 100 % aufweist.

3. Verfahren nach einem der vorhergehenden Ansprüche, **dadurch gekennzeichnet, dass** das zweite Verhältnis von erstem Kraftstoff zu zweitem Kraftstoff einen Anteil an zweitem Kraftstoff von 100 % aufweist.

4. Verfahren nach einem der vorhergehenden Ansprüche, **dadurch gekennzeichnet, dass** das Ändern der Zusammensetzung des Kraftstoffgemischs mittels eines Mischventils oder in einem Mischrohr erfolgt.

5. Verfahren nach einem der vorhergehenden Ansprüche, **dadurch gekennzeichnet, dass** die Temperaturänderung in der Einspritzpumpe der Verbrennungskraftmaschine erfasst wird.

6. Verfahren nach einem der vorhergehenden Schritte, **dadurch gekennzeichnet, dass** der erste Kraftstoff ein Kraftstoff mit hohem Schwefelgehalt und der zweite Kraftstoff ein Kraftstoff mit niedrigem Schwefelgehalt ist.

7. Verfahren nach einem der vorhergehenden Schritte, **dadurch gekennzeichnet, dass** der erste Kraftstoff Schweröl und der zweite Kraftstoff Marinegasöl (MGO) oder Marinedieselöl (MDO) ist.

## Claims

1. Method for switching over an internal combustion engine from the operation with a first fuel to the operation with a second fuel, the first fuel having a first viscosity at a predetermined temperature and the second fuel having a second viscosity different from the first viscosity at the same temperature,
with the steps
- operating the internal combustion engine with a fuel mixture with a predetermined first ratio of the first fuel to the second fuel and
- changing the proportion of the first fuel to the second fuel with a predetermined rate of change, until a predetermined second ratio of the first fuel to the second fuel is reached,
wherein at least one fuel or the fuel mixture is being tempered for reaching a predetermined viscosity,
**characterized by**
detecting the change in temperature of the fuel mixture occurring when changing the proportion of the first fuel to the second fuel per predetermined unit of time and
setting a rate of change at which a predetermined maximum permissible rate of change in temperature is not exceeded.

2. Method according to Claim 1, **characterized in that** the first ratio of the first fuel to the second fuel has a 100 % proportion of the first fuel.

3. Method according to one of the preceding claims, **characterized in that** the second ratio of the first fuel to the second fuel has a 100 % proportion of the second fuel.

4. Method according to one of the preceding claims, **characterized in that** a change in the composition of the fuel mixture takes place by means of a mixing valve or in a mixing tube.

5. Method according to one of the preceding claims, **characterized in that** the change in temperature is detected inside the injection pump of the internal combustion engine.

6. Method according to one of the preceding claims, **characterized in that** the first fuel is a fuel with a high sulfur content and the second fuel is a fuel with a low sulfur content.

7. Method according to one of the preceding claims, **characterized in that** the first fuel is heavy fuel and the second fuel is marine gas oil (MGO) or marine diesel oil (MDO).

## Revendications

1. Procédé permettant de faire passer un moteur à combustion interne d'un mode de fonctionnement avec un premier carburant à un mode de fonctionnement avec un deuxième carburant, le premier carburant présentant une première viscosité à une température prédéterminée et le deuxième carburant une deuxième viscosité différente de la première viscosité à la même température
comportant les étapes
- Fonctionnement du moteur à combustion interne avec un mélange de carburant qui présente un premier rapport prédéterminé entre le premier carburant et le deuxième carburant, et
- Modification de la proportion du premier carburant par rapport au deuxième carburant à une vitesse de modification prédéterminée jusqu'à ce qu'elle atteigne une deuxième proportion prédéterminée entre le premier carburant et le deuxième carburant,
à savoir que la température d'au moins un carburant ou d'au moins un mélange de carburant est régulée jusqu'à l'obtention d'une viscosité prédéterminée,
**caractérisé par**
l'enregistrement du changement de température du mélange de carburant se produisant lors de la modification de la proportion entre le premier carburant et le deuxième carburant par unité de temps prédéterminée et
le réglage de la vitesse de modification de la proportion sans dépasser une vitesse maximale admissible prédéterminée de modification de la température.

2. Procédé selon la revendication 1, **caractérisé en ce que** la première proportion du premier carburant représente, par rapport au deuxième carburant, une proportion de 100 % du premier carburant.

3. Procédé selon une des précédentes revendications, **caractérisé en ce que** la deuxième proportion du premier carburant représente, par rapport au deuxième carburant, représente une proportion de 100 % du deuxième carburant.

4. Procédé selon une des précédentes revendications, **caractérisé en ce que** la modification de la composition du mélange de carburant est effectuée au moyen d'une vanne mélangeuse ou dans un tuyau mélangeur.

5. Procédé selon une des précédentes revendications, **caractérisé en ce que** le changement de température survenant dans la pompe d'injection du moteur à combustion interne est détecté.

6. Procédé selon une des précédentes revendications, **caractérisé en ce que** le premier carburant est un carburant à forte teneur en soufre et le deuxième carburant un carburant à faible teneur en soufre.

7. Procédé selon une des précédentes revendications, **caractérisé en ce que** le premier carburant est du pétrole lourd et le deuxième carburant du gazole marin (MGO) ou du diesel marin (MDO).
